Europäisches Patentamt

European Patent Office

Office européen des brevets

(19)

(11) **EP 0 546 928 B1**

(12) **FASCICULE DE BREVET EUROPEEN**

(45) Date de publication et mention
de la délivrance du brevet:
**19.03.1997 Bulletin 1997/12**

(51) Int Cl.⁶: $G01S\ 17/88$, $B60Q\ 1/52$

(21) Numéro de dépôt: **92403327.7**

(22) Date de dépôt: **08.12.1992**

(54) **Dispositif intégré de détection et d'identification d'obstacles embarqué notamment à bord d'un véhicule automobile**

Auf einem Kraftfahrzeug angeordnete Einrichtung zur Entdeckung und Identifizierung von Hindernissen

On a motor vehicle mounted device for detecting and identifying obstacles

(84) Etats contractants désignés:
**DE GB IT**

(30) Priorité: **10.12.1991 FR 9115299**

(43) Date de publication de la demande:
**16.06.1993 Bulletin 1993/24**

(73) Titulaires:
- **AUTOMOBILES PEUGEOT**
  **75116 Paris (FR)**
- **AUTOMOBILES CITROEN**
  **92200 Neuilly-sur-Seine (FR)**
- **REGIE NATIONALE DES USINES RENAULT S.A.**
  **92109 Boulogne Billancourt (FR)**

(72) Inventeur: **Esteve, Daniel**
**F-31520 Ramonville (FR)**

(74) Mandataire:
**Habasque, Etienne Joel Jean-François et al**
**Cabinet Lavoix**
**2, Place d'Estienne d'Orves**
**75441 Paris Cédex 09 (FR)**

(56) Documents cités:
| | |
|---|---|
| EP-A- 0 159 553 | WO-A-87/05138 |
| DE-A- 2 921 298 | DE-A- 3 637 165 |
| GB-A- 2 139 036 | GB-A- 2 139 445 |
| US-A- 4 479 053 | |

- PATENT ABSTRACTS OF JAPAN vol. 8, no. 254 (P-315)(1691) 21 Novembre 1984 & JP-A-59 126 273
- APPLIED OPTICS vol. 29, no. 23, Août 1990, NEW YORK page 3331 K. SHIMADA 'Electronically scanned Laser Range Finder'
- SIEMENS FORSCHUNGS- UND ENTWICKLUNGSBERICHTE vol. 15, no. 3, 1986, BERLIN pages 105 - 114 MEIXNER ET AL 'Infrared Sensors based on the Pyroelectric Polymer Polyvinylidene Fluoride (PVDF)'

## Description

La présente invention concerne un dispositif intégré de détection et d'identification d'obstacles embarqué notamment à bord d'un véhicule automobile.

On connaît déjà dans l'état de la technique un certain nombre de dispositifs de détection d'obstacles de ce type, qui sont basés sur l'utilisation de rayonnements infrarouges, d'hyperfréquences, d'ultrasons ou de moyens pyroélectriques.

On se reportera par exemple aux documents DE-A-36 37 165 et SIEMENS FORSCHUNGS - UND ENTWICKLUNGSBERICHTE, volume 15, n° 3, 1986, Berlin, pages 105-114.

Ces dispositifs comportent une partie d'émission disposée sur le véhicule et permettant d'émettre un faisceau d'analyse d'une partie de l'environnement du véhicule et une partie de réception d'un faisceau réfléchi par celui-ci.

L'analyse de ce faisceau réfléchi permet de déterminer les différents éléments de l'environnement immédiat du véhicule.

Cependant, les dispositifs connus actuellement dans l'état de la technique présentent un certain nombre d'inconvénients.

En effet, dans un environnement brouillé, différentes perturbations peuvent dégrader le fonctionnement des équipements électroniques de ces dispositifs.

Pour assurer l'immunité de ces équipements aux émissions indésirables, plusieurs solutions ont proposées mais elles augmentent d'autant le coût de fabrication des dispositifs.

Par ailleurs, l'atmosphère ne transmet pas les radiations électromagnétiques d'une manière uniforme. Deux phénomènes sont à l'origine de ce problème, d'une part l'absorption par les constituants gazeux de l'atmosphère et d'autre part la diffusion due aux particules en suspension (fumée, brume, brouillard).

Il existe également des problèmes de directivité des faisceaux utilisés dans les dispositifs de l'état de la technique, car il est nécessaire d'atteindre des précisions de l'ordre du degré, si l'on veut être capable de positionnner des véhicules les uns par rapport aux autres.

Enfin, les différents dispositifs développés dans l'état de la technique sont relativement encombrants et d'un prix de revient extrêmement important, ce qui ne permet pas d'envisager actuellement l'application en grande série de ceux-ci.

Le but de l'invention est donc de résoudre ces problèmes en proposant un dispositif intégré de détection et d'identification d'obstacles qui soit simple, fiable, d'un prix de revient peu élevé, d'un encombrement relativement limité et dont le fonctionnement ne soit pas dégradé par les perturbations rencontrées dans ce type d'applications.

A cet effet, l'invention a pour objet un dispositif intégré de détection et d'identification d'obstacles embarqué notamment à bord d'un véhicule automobile, comportant au moins une structure de détection et d'identification disposée sur le véhicule, adaptée pour balayer l'environnement de celui-ci et comportant des moyens d'émission d'au moins un faisceau infrarouge en direction dudit environnement, et des moyens de réception du faisceau infrarouge réfléchi par l'environnement, caractérisé en ce qu'il comporte en outre des moyens pyroélectriques d'analyse thermique dudit environnement et des moyens de traitement des signaux de sortie des moyens de réception du faisceau infrarouge réfléchi et des moyens pyroélectriques pour reconstituer l'environnement, respectivement par localisation et identification des différents éléments de celui-ci, en ce que les moyens d'émission et de réception de faisceau infrarouge comprennent des diodes électroluminescentes et une matrice de photodiodes respectivement, en ce que la matrice de photodiodes est disposée sur une structure pyroélectrique des moyens pyroélectriques et en ce qu'une couche de matériau isolant thermique, transparent au rayonnement infrarouge, est interposée entre ces deux éléments, cet ensemble étant placé derrière des moyens de focalisation disposés dans une fenêtre de la structure.

L'invention sera mieux comprise à l'aide de la description qui va suivre, donnée uniquement à titre d'exemple et faite en se référant aux dessins annexés, sur lesquels :

- la Fig.1 représente une vue schématique d'une structure de détection et d'identification entrant dans la constitution d'un dispositif selon l'invention;
- la Fig.2 illustre un découpage possible en trois zones d'analyse de l'environnement par exemple à l'avant du véhicule;
- la Fig.3 représente une vue schématique en coupe d'un détecteur intégré entrant dans la constitution d'un dispositif selon l'invention;
- la Fig.4 représente un schéma synoptique de moyens électriques de commande et de traitement entrant dans la constitution d'un dispositif selon l'invention; et
- la Fig.5 représente un schéma illustrant un calcul de distance par une méthode de triangulation.

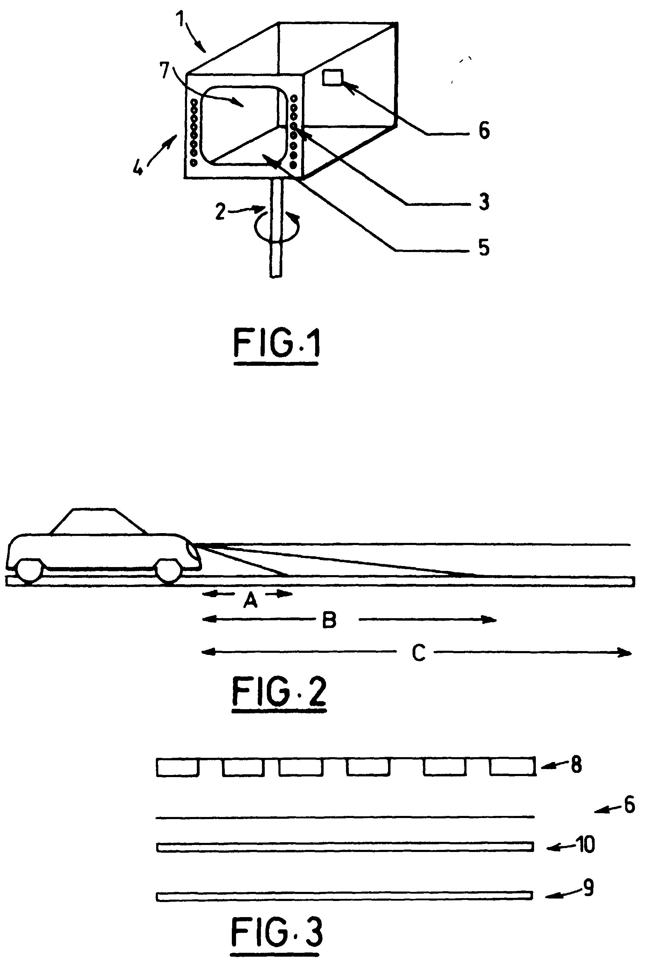

Ainsi qu'on peut le voir sur la Fig.1, un dispositif de détection et d'identification d'obstacles peut être utilisé notamment à bord d'un véhicule automobile et dans ce cas, il comporte au moins une structure complète de détection et d'identification désignée par la référence générale 1 sur cette figure. Cette structure est fixée par exemple à l'avant du véhicule et est déplaçable en rotation pour balayer au moins une partie de l'environnement du véhicule et plus particulièrement de l'environnement à l'avant de celui-ci.

Le mouvement de rotation de cette structure est imprimé par exemple par un arbre de support 2 dont une extrémité porte la structure et dont une autre extrémité est reliée par exemple à un moteur électrique de type classique (non représenté).

Cette structure de détection comporte des moyens d'émission d'au moins un faisceau infrarouge en direction de l'environnement. Ces moyens d'émission de faisceau sont constitués par des barrettes de diodes électroluminescentes (GaA1As) munies de lentilles intégrées ou des diodes Laser de même nature. Ces barrettes sont désignées par les références 3 et 4 sur cette figure 1 et sont disposées par exemple sur les côtés de la structure de support, de part et d'autre d'une fenêtre 5 dont la fonction sera décrite plus en détail par la suite.

Ces moyens d'émission sont adaptés pour engendrer des faisceaux collimatés (angle d'ouverture inférieur à 1°) et pulsés (impulsion d'une microseconde).

Ces diodes peuvent être disposées selon des angles différents sur la structure de support pour découper la partie d'environnement balayée en au moins trois zones d'analyse à des distances s'éloignant du véhicule.

Ces trois zones sont illustrées sur la Fig.2 et désignées par les références A, B, C.

La zone A est balayée par un faisceau de courte portée qui est en fait un faisceau de positionnement (5 m, 120°) permettant de déterminer le positionnement du véhicule sur la route en prenant comme repère par exemple les lignes blanches réfléchissantes peintes sur la chaussée ou encore les bords de route.

La zone B est balayée par un faisceau de moyenne portée qui est en fait un faisceau de proximité (30m, 120°), permettant de fournir des renseignements sur l'état de la circulation et de situer le véhicule par rapport aux véhicules environnants.

La zone C est balayée par un faisceau de longue portée qui est en fait un faisceau de route (supérieur à 50 m, 30°) permettant de prévenir l'utilisateur de l'approche de tout véhicule dans la zone de proximité.

Cette multiplication du nombre de faisceaux utilisés a une incidence positive sur la conception optique et sur la qualité de l'image restituée à l'utilisateur en fonction de la profondeur de champ.

Les diodes électroluminescentes décrites précédemment permettent donc d'envoyer ces faisceaux vers l'avant du véhicule et la structure de détection du dispositif selon l'invention comporte un détecteur intégré 6 muni de moyens de réception du ou des faisceaux infrarouges réfléchis par l'environnement.

Ainsi que cela sera décrit plus en détail par la suite, ce détecteur comporte également des moyens pyroélectriques d'analyse thermique de cet environnement.

Ce détecteur intégré 6 est disposé derrière un ou plusieurs dispositifs optiques de focalisation 7 placés dans la fenêtre 5 mentionnée précédemment.

Ainsi, l'écho des faisceaux infrarouges émis par les moyens d'émission ainsi que le flux thermique infrarouge émanant de l'environnement à analyser sont focalisés par ces moyens optiques qui peuvent être constitués par exemple par une lentille, sur le détecteur 6 décrit précédemment.

Ainsi qu'on l'a indiqué précédemment, ce détecteur est en fait une structure hétérogène comportant deux types de moyens de détection complémentaires comme on peut le voir sur la Fig.3.

En effet, ce détecteur comprend d'une part une matrice 8 de photodiodes au silicium dont chaque pixel est une jonction P-N réalisant une détection active des signaux réfléchis reçus.

Cette technique de détecteur matriciel est très avantageuse car elle permet d'améliorer la précision de la localisation d'un obstacle éventuel par analyse de l'image infrarouge obtenue. Ainsi par exemple, l'affectation d'un poids à chacun des pixels en fonction de l'énergie reçue, permet de situer par interpolation la zone de flux maximum c'est à dire l'image précise de l'obstacle.

On améliore ainsi la précision relative quant à la localisation de l'obstacle.

Par ailleurs, ces moyens étant montés sur un véhicule, cette configuration matricielle permet d'analyser et de compenser le mouvement de tangage et de roulis imprimé au véhicule par la topographie de la route, de sorte que la précision de la détection sera meilleure dans ce cas que celle obtenue avec un seul détecteur.

Le détecteur comporte également de manière totalement intégrée des moyens pyroélectriques 9 réalisés à base de polymère ou de copolymère orienté, c'est à dire ayant subi une polarisation, comme par exemple du polyvinyl difluoré, rapporté sur silicium et muni de deux électrodes métalliques de détection. Ces moyens sont bien connus dans l'état de la technique et ne seront pas décrits plus en détail par la suite.

L'une des électrodes de détection est éclairée tandis que l'autre est masquée et un courant pyroélectrique est obtenu par soustraction ou "méthode des blanc et noir". Cette association de deux électrodes de détection permet de réduire les signaux liés aux vibrations qui sont mesurées comme un signal parasite par le capteur pyroélectrique qui est également en fait piézoélectrique.

Enfin, une couche de matériau isolant thermique transparent à l'infrarouge, comme par exemple du polyimide, est insérée entre la matrice photovoltaïque et le capteur pyroélectrique pour éviter que cette matrice ne joue un rôle de refroidisseur du détecteur pyroélectrique et n'altère sa réponse.

On conçoit donc que cette structure de détection met en oeuvre une détection active et une détection passive des obstacles.

La détection active par la matrice photovoltaïque, vise la détection de l'obstacle et sa localisation précise par rapport au détecteur et donc au véhicule.

Les faisceaux infrarouges émis par les diodes électroluminescentes éclairent l'environnement dans un mouvement rotatif. Lorsqu'ils sont réfléchis par un obstacle, les faisceaux de retour sont focalisés par des moyens optiques sur la matrice photovoltaïque qui fournit alors un courant électrique, c'est à dire un signal écho.

La matrice de photodiodes grâce à un traitement adéquat des données de tous les pixels, précise la position augulaire de l'obstacle. Par le mouvement imprimé, on a également une image totale de la partie d'environnement analysée sur trois niveaux, à savoir :

- courte portée;
- moyenne portée;
- longue portée.

La détection passive pyroélectrique vise quant à elle l'identification de l'obstacle. Le fonctionnement du capteur pyroélectrique s'appuie sur l'usage simultané de deux structures, l'une éclairée et l'autre pas. Le rayonnement thermique infrarouge émis par les obstacles est détecté par la structure pyroélectrique éclairée qui traduit l'élévation de sa température par un courant It auquel est associé le courant de vibrations Iv1. La structure masquée ne perçoit quant à elle que les vibrations mécaniques auxquelles est soumis l'ensemble du capteur et qu'elle convertit en un courant piézoélectrique Iv2. Le courant pyroélectrique utile est obtenu par soustraction :

$$Iu = It + Iv1 - Iv2$$

On remarque que si Iv1 = Iv2, on peut s'affranchir des effets des vibrations.

Le capteur thermique permet d'identifier l'obstacle et de le distinguer comme étant un véhicule. En effet, il distingue tout d'abord l'émissivité thermique de l'obstacle, ce qui peut concourir à cette identification. Mais, de plus, on peut envisager d'utiliser sur des véhicules des balises émettant dans l'infrarouge thermique ( 3 à 5 µm et 8 à 14 µm) qui pourront alors être très facilement identifiées comme correspondant à une voiture, un camion, une ambulance, etc. Ceci autorise une reconnaissance encore plus précise de ces véhicules.

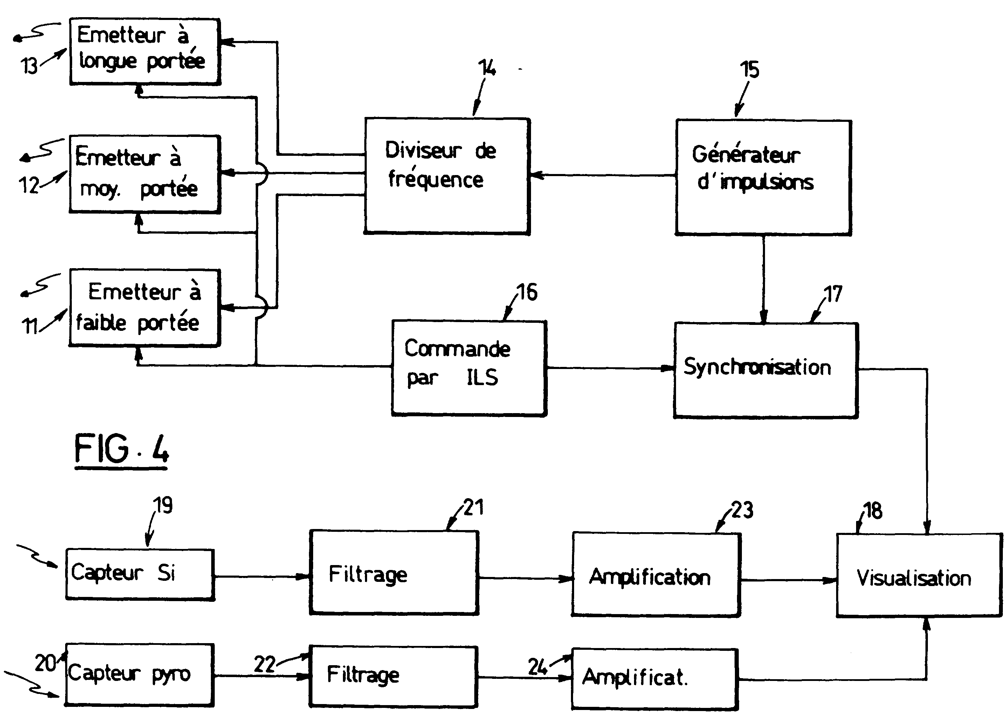

Comme on peut le voir sur la Fig.4, les diodes électroluminescentes sont réparties en trois ensembles, l'un à faible portée désigné par la référence 11 sur cette figure, l'autre à moyenne portée, 12, et le dernier à longue portée, 13.

Ces diodes électroluminescentes sont attaquées par un diviseur de fréquence 14, recevant lui-même le signal de sortie d'un générateur d'impulsions 15.

Une commande par ILS 16 est également appliquée à ces diodes, cette commande étant également appliquée à des moyens de synchronisation 17 recevant un signal de sortie du générateur d'impulsions 15 et dont la sortie est reliée à des moyens de visualisation 18.

Ces moyens de visualisation reçoivent des informations de la matrice photovoltaïque 19 et du capteur pyroélectrique 20, décrits précédemment, à travers des moyens de filtrage 21 et 22 respectivement et des moyens d'amplification 23 et 24 respectivement.

On conçoit donc que les informations délivrées par la matrice photovoltaïque et le capteur pyroélectrique, sont traitées et par exemple visualisées par affichage sur un afficheur du tableau de bord du véhicule et perçues par l'utilisateur, afin que celui-ci puisse analyser l'environnement du véhicule.

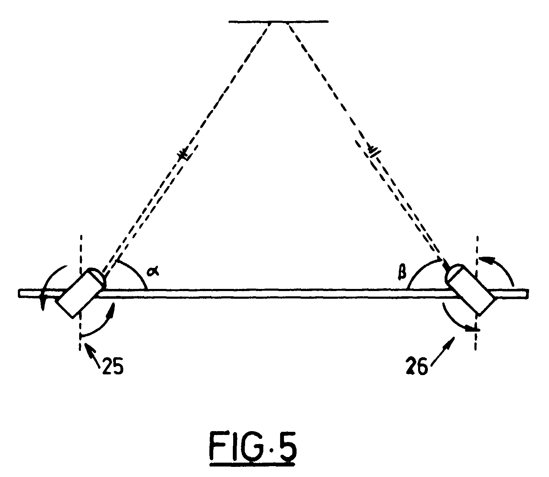

Sur la Fig.5, on a illustré un mode de réalisation particulier d'un dispositif de détection selon l'invention dans lequel deux structures de détection désignées par les références 25 et 26 sont fixées sur le véhicule, de manière décalée, pour permettre aux moyens de traitement des signaux de sortie de ces structures, de déterminer la distance des différents éléments de l'environnement par rapport au véhicule par une méthode de triangulation. Ces moyens comprennent alors par exemple une unité de calcul à microprocesseur.

Cette méthode est bien connue dans l'état de la technique et est basée sur des considérations géométriques.

En effet, en connaissant la distance séparant les deux structures de détection et les angles α et β entre la droite passant par ces deux structures de détection et les faisceaux respectifs de chacune de celles-ci, on peut déterminer le sommet du triangle correspondant et ainsi localiser l'obstacle.

Dans ce mode de réalisation, les deux structures de détection peuvent avoir des rotations indépendantes l'une de l'autre. L'unité de calcul reliée aux sorties de ces deux structures permet d'extraire la position exacte de l'obstacle par analyse de ces sorties, de manière classique.

Bien entendu, d'autres modes de réalisation de ces moyens de mesure de la distance entre les différents éléments de l'environnement et le véhicule, peuvent être utilisés comme par exemple un télémètre laser. Ces télémètres, bien connus dans l'état de la technique, sont basés sur la mesure du temps de propagation d'un faisceau entre des moyens d'émission de celui-ci, la cible et des moyens de réception du faisceau de retour.

Ainsi, des informations aussi complètes que possible peuvent être affichées et délivrées à l'utilisateur afin que celui-ci connaisse de manière très précise l'environnement que le véhicule va rencontrer.

Les avantages du dispositif proposé sont :

- des meilleures performances de détection liées à l'utilisation combinée de deux capteurs;
- une meilleure sécurité car ces deux capteurs ne sont pas de même nature et sont aussi redondants au niveau de la détection;
- un coût faible lié à la possibilité d'intégrer ces deux capteurs en un objet unique fabricable en série.

**Revendications**

1. Dispositif intégré de détection et d'identification d'obstacles embarqué notamment à bord d'un véhicule automobile, comportant au moins une structure de détection et d'identification (1;25,26) disposée sur le véhicule, adaptée pour balayer l'environnement de celui-ci et comportant des moyens (3,4; 11,12,13) d'émission d'au moins un faisceau infrarouge en direction dudit environnement, et des moyens (6;19) de réception du faisceau infrarouge réfléchi par l'environnement, caractérisé en ce qu'il comporte en outre des moyens pyroélectriques (6; 20) d'analyse thermique dudit environnement et des moyens (18,21,22,23, 24) de traitement des signaux de sortie des moyens de réception du faisceau infrarouge réfléchi et des moyens pyroélectriques pour reconstituer l'environnement, respectivement par localisation et identification des différents éléments de celui-ci, en ce que les moyens d'émission et de réception de faisceau infrarouge comprennent des diodes électroluminescentes (3,4) et une matrice (8) de photodiodes respectivement, en ce que la matrice de photodiodes est disposée sur une structure pyroélectrique des moyens pyroélectriques et en ce qu'une couche (10) de matériau isolant thermique, transparent au rayonnement infrarouge, est interposée entre ces deux éléments, cet ensemble étant placé derrière des moyens de focalisation (7) disposés dans une fenêtre (5) de la structure.

2. Dispositif selon la revendication 1, caractérisé en ce que les moyens d'émission de faisceau infrarouge émettent au moins trois faisceaux infrarouges délimitant à partir du véhicule au moins trois zones d'analyse (A,B,C) à des distances s'éloignant du véhicule.

3. Dispositif selon l'une quelconque des revendications précédentes, caractérisé en ce que les moyens pyroélectriques comprennent une structure pyroélectrique (9) réalisée à base de polymère rapporté sur silicium et munie d'électrodes de détection.

4. Dispositif selon la revendication 3, caractérisé en ce que le polymère est du polyvinyl difluoré.

5. Dispositif selon l'une quelconque des revendications précédentes, caractérisé en ce que la couche de matériau isolant est du polyimide.

6. Dispositif selon l'une quelconque des revendications précédentes, caractérisé en ce qu'il comporte deux structures de détection (25,26) fixées de manière décalée sur le véhicule et en ce que les moyens de traitement comprennent des moyens de détermination de la distance des différents éléments de l'environnement par rapport au véhicule, par une méthode de triangulation.

7. Dispositif selon la revendication 6, caractérisé en ce que les deux structures de détection sont entraînées en rotation indépendamment l'une de l'autre.

8. Dispositif selon l'une quelconque des revendications 1 à 5, caractérisé en ce qu'il comporte un télémètre laser de détermination de la distance des différents éléments de l'environnement par rapport au véhicule.

9. Dispositif selon l'une quelconque des revendications précédentes, caractérisé en ce qu'il comporte des moyens (18) d'affichage des informations de sortie des moyens (19) de réception de faisceau infrarouge réfléchi et des moyens (20) pyroélectriques.

10. Dispositif selon l'une quelconque des revendications précédentes, caractérisé en ce qu'il coopère avec des balises thermiques disposées dans l'environnement en vue d'améliorer la reconstitution de celui-ci.

**Patentansprüche**

1. Einrichtung zur Entdeckung und Identifizierung von Hindernissen, die insbesondere an bord eines Kraftfahrzeugs angeordnet ist, bestehend aus mindestens einer Struktur zum Entdecken und Identifizieren (1; 25, 26), die an dem Fahrzeug angeordnet und derart ausgeführt ist, daß sie die Umgebung desselben abtastet, und bestehend aus Mitteln (3, 4; 11, 12, 13) zum Aussenden von mindestens einem Infrarotstrahlenbündel in die Richtung dieser Umgebung und Mitteln (6; 19) für den Empfang des Infrarotstrahlenbündels, das von der Umgebung reflektiert wurde, **dadurch gekennzeichnet,** daß sie ferner pyroelektrische Mittel (6; 20) zur Thermoanalyse dieser Umgebung und Mittel (18, 21, 22, 23, 24) zur Verarbeitung der Ausgangssignale der Mittel für den Empfang des reflektierten Infrarotstrahlenbündels und pyroelektrische Mittel umfaßt, um die Umgebung durch Lokalisierung bzw. Identifizierung der verschiedenen Elemente derselben nachzubilden, daß die Sende- und Empfangsmittel der Infrarotstrahlenbündel Lumineszenzdioden (3, 4) bzw. eine Photodiodenmatrix (8) umfassen, daß die Photodiodenmatrix auf einer pyroelektrischen Struktur der pyroelektrischen Mittel angeordnet ist und daß eine Schicht (10) von Thermoisoliermaterial, das infrarottransparent ist, zwischen diesen beiden Elementen angeordnet ist, wobei diese Einheit hinter Fokussierungsmitteln (7) angeordnet ist, die sich in einem Fenster (5) der Struktur befinden.

2. Einrichtung nach Anspruch 1, **dadurch gekennzeichnet,** daß die Mittel zum Aussenden eines Infrarotstrahlenbündels mindestens drei Infrarotstrahlenbündel aussenden, die ausgehend von dem Fahrzeug mindestens drei Analysezonen (A, B, C) in Abständen, die immer weiter vom Fahrzeug entfernt sind, begrenzen.

3. Einrichtung nach einem der vorhergehenden Ansprüche, **dadurch gekennzeichnet,** daß die pyroelektrischen Mittel eine pyroelektrische Struktur (9) umfassen, die auf Basis von Polymer, das auf Silizium aufgetragen ist, hergestellt und mit Entdeckungselektroden versehen ist.

4. Einrichtung nach Anspruch 3, **dadurch gekennzeichnet,** daß das Polymer Difluorpolyvinyl ist.

5. Einrichtung nach einem der vorhergehenden Ansprüche, **dadurch gekennzeichnet,** daß die Schicht Isoliermaterial Polyimid ist.

6. Einrichtung nach einem der vorhergehenden Ansprüche, **dadurch gekennzeichnet,** daß sie zwei Entdeckungsstrukturen (25, 26) umfaßt, die versetzt an dem Fahrzeug befestigt sind, und daß die Verarbeitungsmittel Mittel zur Bestimmung des Abstandes der verschiedenen Elemente der Umgebung in bezug auf das Fahrzeug mit Hilfe einer Triangulationsmethode umfassen.

7. Einrichtung nach Anspruch 6, **dadurch gekennzeichnet,** daß die beiden Entdeckungsstrukturen sich voneinander unabhängig drehen.

8. Einrichtung nach einem der Ansprüche 1 bis 5, **dadurch gekennzeichnet,** daß sie einen Laser-Telemeter zur Bestimmung des Abstandes der verschiedenen Elemente der Umgebung in bezug auf das Fahrzeug umfaßt.

9. Einrichtung nach einem der vorhergehenden Ansprüche, **dadurch gekennzeichnet,** daß sie Mittel (18) zur Anzeige der Ausgangsinformationen der Mittel (19) für den Empfang des reflektierten Infrarotstrahlenbündels und der pyroelektrischen Mittel (20) umfaßt.

10. Einrichtung nach einem der vorhergehenden Ansprüche, **dadurch gekennzeichnet,** daß sie mit Thermobaken zusammenwirkt, die in der Umgebung angeordnet sind, um die Nachbildung derselben zu verbessern.

**Claims**

1. Integrated device for the detection and identification of obstacles, which is more particularly carried on a motor vehicle, having at least one detection and identification structure (1; 25, 26) on the vehicle suitable for scanning the environment thereof and incorporating means (3, 4,; 11, 12, 13) for emitting at least one infrared beam in the direction of said environment and means (6; 19) for receiving the infrared beam reflected by the environment, characterized in that it also incorporates pyroelectric means (6; 20) for the thermal analysis of said environment and means (18, 21, 22, 23, 24) for processing output signals of the reception means of the reflected infrared beam and pyroelectric means for reconstituting the environment, respectively by locating and identifying the different elements thereof, that the infrared beam emission and reception means comprise light-emitting diodes (3, 4) and an array (8) of photodiodes respectively, that the array of photodiodes is placed on a pyroelectric structure of the pyroelectric means and that a thermally insulating material layer (10) transparent to the infrared radiation is interposed between said two elements, said assembly being placed behind focussing means (7) located in a window (5) of the structure.

2. Device according to claim 1, characterized in that the infrared beam emission means emit at least three infrared beams defining from the vehicle at least three analysis zones (A, B, C) at distances moving away from the vehicle

3. Device according to any one of the preceding claims, characterized in that the pyroelectric means incorporate a pyroelectric structure (9) based on a polymer fitted to silicon and provided with detection electrodes.

4. Device according to claim 3, characterized in that the polymer is polyvinyl difluoride.

5. Device according to any one of the preceding claims, characterized in that the insulating material layer is of polyimide.

6. Device according to any one of the preceding claims, characterized in that it has two detection structures (25, 26) fixed in offset manner to the vehicle and in that the processing means comprise means for determining the distance of different elements in the environment from the vehicle using a triangulation method.

7. Device according to claim 6, characterized in that the two detection structures are rotated independently of one another.

8. Device according to any one of the claims 1 to 5, characterized in that it comprises a laser rangefinder for determining the distance of the different elements of the environment from the vehicle.

9. Device according to any one of the preceding claims, characterized in that it has means (18) for displaying the output information from the reflected infrared beam reception means (19) and pyroelectric means (20).

10. Device according to any one of the preceding claims, characterized in that it cooperates with thermal beacons placed in the environment with a view to improving the reconstitution thereof.

## FIG·1

## FIG·2

## FIG·3

Emetteur à longue portée `13`

Emetteur à moy. portée `12`

Emetteur à faible portée `11`

Diviseur de fréquence `14`

Générateur d'impulsions `15`

Commande par ILS `16`

Synchronisation `17`

## FIG . 4

Capteur Si `19`

Filtrage `21`

Amplification `23`

Visualisation `18`

Capteur pyro `20`

Filtrage `22`

Amplificat. `24`

# FIG·5